# EUROPEAN PATENT APPLICATION

(11) **EP 2 213 873 A1**
(43) Date of publication of application: **04.08.2010**
(21) Application number: 09001337.6
(22) Date of filing: 30.01.2009
(51) Int. Cl.: F03D 7/02, F03D 7/04, G01P 13/02, G05B 13/02

(54) **Estimating an effective wind direction for a wind turbine by means of a learning system**

(71) Applicant: Siemens Aktiengesellschaft, 80333 München (DE)
(72) Inventor: Egedal, Per, 7400 Herning (DK); Rubak, Rune, 8600 Silkeborg (DK)

(57) **Abstract**

Described is a method for estimating the effective direction of wind, which is driving a rotor (110) of a wind turbine (100). The method comprises (a) determining values of at least two parameters being indicative of an operational condition of the wind turbine (100), (b) inputting the values of the at least two parameters into a learning system (132,232), and (c) outputting an output value from the learning system (132,232), wherein the output value is an estimate for the effective wind direction. Further described is a control system (130,230), a wind turbine (100) and a computer program for controlling and/or for carrying out the above mentioned effective wind direction estimation method. Furthermore, a method is described for adjusting the yaw angle position of a rotor (110) of a wind turbine (100) based on an effective wind direction, which has been estimated by the above described effective wind direction estimation method.

## Description

### Field of invention

The present invention relates to the field of wind turbines for generating electric power. In particular, the present invention relates to a method and to a control system for estimating an effective wind direction for a wind turbine by means of a learning system. Further, the present invention relates to a wind turbine and to a computer program for controlling the above mentioned effective wind direction estimation method. Furthermore, the present invention relates to a method for adjusting the yaw angle position of a rotor of a wind turbine based on an effective wind direction, which has been estimated by the above described effective wind direction estimation method.

### Art Background

Wind energy is increasingly recognized as a viable option for complementing and even replacing other types of energy sources such as for instance fossil fuels. In the early development of wind energy, the majority of wind turbines were constructed for operation at a constant speed. However, recently the trend is toward using variable-speed wind turbines to better capture available wind power. In most cases, wind turbine blade pitch angles can be adjusted to control the operation of the variable speed wind turbine.

In order to achieve a maximal power production of a wind turbine it is indispensible to align the rotor of the wind turbine with respect to the actual wind direction. Since the direction of the wind, which is driving the rotor of the wind turbine, is not always the same, a wind turbine has to be provided with a yaw angle control and adjustment system. The yaw angle control and adjustment system has the task to adjust a nacelle of the wind turbine by means of an appropriate rotational movement around a substantially vertical axis in such a manner, that the rotor plane is oriented perpendicular to the wind direction.

The direction of the wind driving a wind turbine is usually measured with a wind direction hardware sensor at one point on the nacelle. Such a hardware wind sensor is for instance a wind vane. However, a wind direction measurement exclusively at a single point typically yields a large inaccuracy due to a relative bad correlation between the overall wind direction within the whole rotor plane and a single point. Furthermore, the rotor blades and the nacelle may cause turbulences which might affect the wind direction measurement. Therefore, also the pitch angle and the geometry of the nacelle may have an impact on the measured wind direction.

In order to set a wind turbine in optimal operational conditions one has to perform the following measures:
1) The effective wind direction of the inflow on the whole rotor of the wind turbine has to be measured accurately. Thereby, the effective wind direction is defined by the mean wind direction within a plane defined the whole plane of the rotor.
2) Actuators for different parameters such as the blade pitch angle and the yaw angle have to be adjusted accordingly in order to (a) optimize the power production and (b) reduce mechanical loads in particular on the blades and on the tower. In particular, finding the optimal yaw angle position of the nacelle is extremely important. A power loss due to an yaw angle error is about 1 - [cos(yaw_err)]^2. Thereby, the yaw angle error yaw_err is given by the mismatch between the wind direction and the yaw angle position of the wind turbine. From this formula one can conclude that a mismatch of 7 degrees results in a power loss of approximately 1,5%. The optimal power production and hence the optimal yaw position is to be set intelligently as function of multiple variables.

In this respect it is mentioned that large yaw angle errors typically result in high mechanical loads acting on the rotor blades. The same type of blade loads occurs when there are large differences between the wind speed at the top of the rotor and at the bottom of the rotor (wind shear).

US2006/002792 describes a method for reducing load and providing yaw alignment in a wind turbine includes measuring displacements or moments resulting from asymmetric loads on the wind turbine. These measured displacements or moments are used to determine a pitch for each rotor blade to reduce or counter asymmetric rotor loading and a favorable yaw orientation to reduce pitch activity. Yaw alignment of the wind turbine is adjusted in accordance with the favorable yaw orientation and the pitch of each rotor blade is adjusted in accordance with the determined pitch to reduce or counter asymmetric rotor loading.

In order to always operate a wind turbine in optimized operational conditions there is a need for improving the accurate-ness for an estimation of the effective wind direction of wind acting on a wind turbine.

### Summary of the Invention

This need may be met by the subject matter according to the independent claims. Advantageous embodiments of the present invention are described by the dependent claims.

According to a first aspect of the invention there is provided a method for estimating the effective wind direction of wind, which is driving a rotor of a wind turbine. The provided method comprises (a) determining values of at least two parameters being indicative for an operational condition of the wind turbine, (b) inputting the values of the at least two parameters into a learning system, and (c) outputting an output value from the learning system, wherein the output value is an estimate for the effective wind direction.

The described effective wind direction estimation method according to a first aspect of the invention is based on the idea that a learning system can be used in order to provide for a precise wind direction estimation based on at least two input parameters being indicative for a current operational condition of the wind turbine.

A precise knowledge of the effective wind direction may provide the advantage that the wind turbine can be set into an operational condition, which allows for an optimized power production. In particular the yaw angle may be adjusted in such a manner that (a) the power production of the wind turbine is increased and (b) mechanical loads acting for instance on the tower of the wind turbine can be reduced. The reduction of such mechanical loads is in particular important if there is a comparatively large wind shear within a rotational plane being defined by the rotor respectively the rotor blades of the wind turbine.

According to an embodiment of the invention the learning system comprises a neural network. By using a neural network the computational power, which is necessary for calculating the effective wind direction can be kept small. In other words, the estimation process can be carried out by a simple processing device having a comparatively small computational power. This may provide the advantage that such a simple processing device can be installed at every wind turbine being operated by an energy company without increasing the initial cost of the wind turbine. In particular, the simple processing device can be implemented within a control unit of a wind turbine, which is anyway used for controlling the operation of the respective wind turbine.

According to a further embodiment of the invention the at least two parameters are selected from the following group: (a) a path of movement, in particular an acceleration, of at least a portion of a tower of the wind turbine, (b) the rotational speed of the rotor, (c) the output power of the wind turbine, and (d) the blade pitch angle of at least one blade of the rotor. In particular, the usage of all four input parameters actual tower movement, rotor speed, actual power production and pitch angle may provide the advantage that a highly precise estimation of the effective wind direction can be guaranteed.

The values of all these parameters may be determined by means of appropriate sensors. In particular, the path of movement of the wind turbine power may be determined by one or more appropriate acceleration sensors, which are attached in particular at the top portion of the tower. In this respect it is mentioned that the described tower accelerations may be caused by wind generated oscillations of the tower. These oscillations may have a significant amplitude in particular if the driving wind force causes tower oscillations with a frequency being close to the resonance frequency of the nacelle and the rotor being mounted on top of the resilient tower.

The rotational speed, the output power and the blade pitch angle can be measured by means of appropriate sensors, which are state of the art and which are used for modern wind turbines. Such sensors are well known for persons skilled in the art. For the sake of conciseness no further details about the functionality of such sensors are given in this patent application.

According to a further embodiment of the invention the learning system is a learning system, which has been trained on measured data. This may provide the advantage that highly reliable experimental data of the wind turbine can be used for training the learning system.

The experimental data may be obtained for instance by a variation of the blade pitch angle within a period of time, within which the wind conditions are not or only insignificantly changed. Thereby, the blade pitch angle may be changed from an optimal angle to a suboptimal angle leading to a reduced power production of the wind turbine. As a further non limiting example the experimental data may be obtained by varying the yaw angle of the rotor respectively of a nacelle of the wind turbine within a period of time, during which the wind situation is comparatively constant.

According to a further embodiment of the invention the learning system is a learning system, which has been trained on calculated data.

The calculated data may be obtained in particular from elaborate computational calculations, which may take into account the whole aerodynamic behavior the wind turbine and in particular the aerodynamic behavior the rotor of the wind turbine. Thereby, inter alia the size and the shape of the blades of the rotor may be taken into account.

The computational calculations may rely on a theoretical model describing in particular the aerodynamic behavior of the wind turbine. In this respect the experimental data may also be denominated model data.

According to a further aspect of the invention there is provided a method for adjusting the yaw angle position of a rotor of a wind turbine. The provided yaw angle adjustment method comprises (a) estimating the effective wind direction by carrying out the method as described above and (b) adjusting the yaw angle based on the estimated effective wind direction.

This further aspect of the present invention is based on the idea that by providing a precise estimate of the effective wind direction the yaw angle can be adjusted in such a manner that the power production of the wind turbine is maximized. Thereby, the yaw angle can be adjusted in such a manner that the effective wind direction is zero. This means that the wind direction, averaged over the whole rotational plane of the rotor, is oriented perpendicular to the rotational plane.

In this respect it is mentioned that the effective wind direction may also change if there is a large wind shear. By changing the yaw position so that the effective wind direction becomes equal to zero, the mechanical loads acting on the rotor blades can be reduced significantly.

According to an embodiment of the invention the yaw angle adjustment method further comprises (a) determining the actual power production of the wind turbine, (b) determining the actual wind speed, and (c) calculating a rated power production of the wind turbine based on the determined wind speed. Thereby, the adjustment of the yaw angle is carried out based on the determined actual power production and on the calculated rated power production.

This embodiment may provide the advantage that the described yaw angle adjustment method can used for effectively controlling the power production of the wind turbine. Thereby, it can be ensured that (a) a large power is produced by the generator of the wind turbine and (b) mechanical loads on the tower of the wind turbine can be kept within acceptable limits.

The actual power production can be derived in a known manner from the actual operational state of the generator of the wind turbine.

The rated power production of the wind turbine depends not only on the wind speed, which can be measured by appropriate wind sensors being attached for instance on top of the nacelle of the wind turbine. The rated power also depends on the mechanical stability of the wind turbine, in particular of the tower of the wind turbine. Since the mechanical load, which can be sustained by the tower, is not infinity, for very large wind speeds the rated power production is smaller than a theoretically achievable power production, which could be realized without taking into account any mechanical load limit.

According to a further embodiment of the invention, if the actual power production is larger than the rated power production, adjusting the yaw angle comprises a detuning of the yaw angle. This may provide the advantage that the wind turbine can be protected against mechanical overloads. Thereby, it is considered that by setting a yaw angle being at least slightly different from the optimal yaw angle apart from reducing the power production also mechanical loads in particular on the tower can be reduced. By timely reducing the mechanical load on the tower shutdowns of the wind turbine can be avoided.

According to a further embodiment of the invention, if the actual power production is smaller than the rated power production, adjusting the yaw angle comprises optimizing the yaw angle. This may provide the advantage that after the described yaw angle adjustment the wind turbine will be operated in an operational condition, which allows for an increased power production. Thereby, the yaw angle may be adjusted in such a manner that the effective wind direction is zero. As has already been mentioned above this may mean that the wind direction, averaged over the whole rotational plane of the rotor, is oriented perpendicular to the rotational plane.

According to a further aspect of the invention there is provided a control system for estimating the effective wind direction of wind, which is driving a rotor of a wind turbine. The described control system comprises (a) a determination unit for determining values of at least two parameters being indicative for an operating condition of the wind turbine, (b) a learning system, which is adapted to receive the values of the at least two parameters, and (c) an output unit for outputting an output value from the learning system, wherein the output value is an estimate for the effective wind direction.

This further aspect of the invention is based on the idea that the above mentioned method for estimating the direction of wind, which is driving a rotor of a wind turbine, can be executed or controlled by the described control system. This control system can be easily implemented into a known wind turbine. Thereby, the known wind turbine will be converted into a new type of wind turbine, which may be adapted to carry out any embodiment of the above described methods.

The described control system may be realized by means of a computer program respectively by means of software. However, the control system may also be realized by means of one or more specific electronic circuits respectively hardware. Furthermore, the control system may also be realized in a hybrid form, i.e. in a combination of software modules and hardware modules.

At this point it is mentioned that the control system may also be used in order to control any embodiment of the above described yaw angle adjustment method.

According to a further aspect of the invention there is described a wind turbine for generating electric power. The described wind turbine comprises (a) a tower and (b) a rotor, which is arranged at a top portion of the tower and which comprises at least one blade, wherein the rotor is rotatable around a rotational axis and the at least one blade extends radial with respect to the rotational axis. The described wind turbine further comprises (c) a generator being mechanically coupled with the rotor, and (d) a control system as described above.

This further aspect of the invention is based on the idea that by embedding the above described control system into a usual wind turbine, the wind turbine can be provided with the functionality to carry out the above described method for estimating an achievable power production.

According to an embodiment of the invention the wind turbine further comprises (a) a path of movement sensor for measuring a movement of at least one portion of the tower, (b) a rotational-speed sensor for measuring the actual rotational speed of the rotor, (c) a power sensor for measuring the actual power production of the wind turbine, and (d) an angle sensor for measuring the blade pitch angle of the at least one blade. Thereby, each of the path of movement sensor, the rotational-speed sensor, the power sensor and the angle sensor is coupled to the control system and the control system is adapted to estimate the effective wind direction based on the actual movement of the at least one portion of the tower, the actual rotational speed of the rotor, the actual power production of the wind turbine and the actual blade pitch angle of the at least one blade.

As has already been mentioned above the usage of the four input parameters actual tower movement, rotor speed, actual power production and pitch angle may provide the advantage that a highly precise estimation of the effective wind direction can be guaranteed.

According to a further aspect of the invention there is described a computer program for estimating the effective wind direction of wind, which is driving a rotor of a wind turbine. The computer program, when being executed by a control system, is adapted for controlling any embodiment of the above described effective wind direction estimation method.

As used herein, reference to a computer program is intended to be equivalent to a reference to a program element and/or to a computer readable medium containing instructions for controlling a computer system to coordinate the performance of the above described method.

The computer program element may be implemented as computer readable instruction code in any suitable programming language, such as, for example, JAVA, C++, and may be stored on a computer-readable medium (removable disk, volatile or nonvolatile memory, embedded memory/processor, etc.). The instruction code is operable to program a computer or any other programmable device to carry out the intended functions. The computer program may be available from a network, such as the World Wide Web, from which it may be downloaded.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

The aspects defined above and further aspects of the present invention are apparent from the example of embodiment to be described hereinafter and are explained with reference to the example of embodiment. The invention will be described in more detail hereinafter with reference to an example of embodiment but to which the invention is not limited.

### Brief Description of the Drawings

Figure 1 shows a wind turbine comprising a control system for estimating the effective wind direction of wind, which is driving a rotor of a wind turbine.
Figure 2 shows a yaw angle control system for adjusting the yaw angle position of a rotor of a wind turbine, wherein the yaw angle control system comprises a neural network for estimating the effective wind direction of a wind, which is driving the rotor.

### Detailed Description

The illustration in the drawing is schematically. It is noted that in different figures, similar or identical elements are provided with the same reference signs or with reference signs, which are different from the corresponding reference signs only within the first digit.

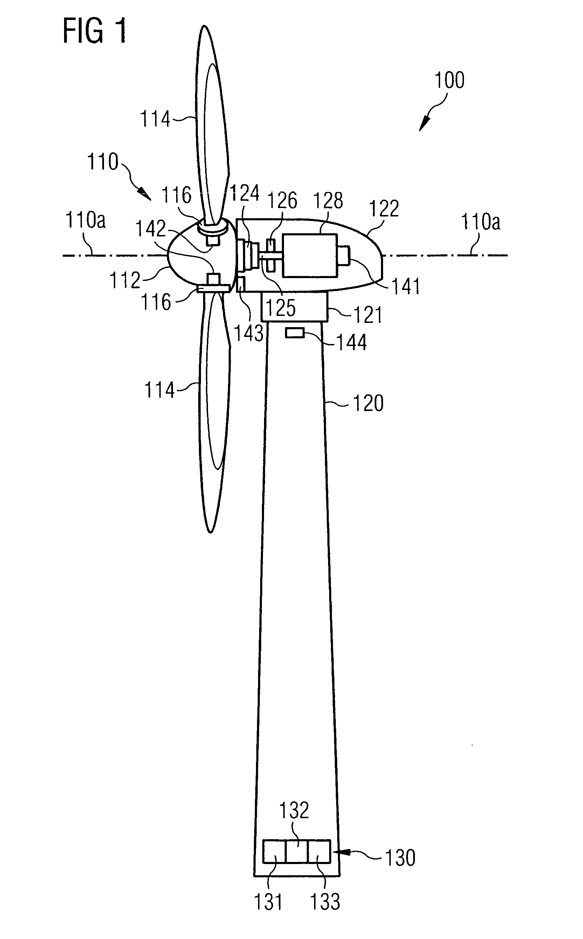

Figure 1 shows a wind turbine 100 according to an embodiment of the invention. The wind turbine 100 comprises a tower 120, which is mounted on a non-depicted fundament. On top of the tower 120 there is arranged a housing 122. In between the tower 120 and the housing there is provided a yaw angle adjustment device 121, which is capable of rotating the housing 122 around a non depicted vertical axis, which is aligned with the longitudinal extension of the tower 120. By controlling the rotor angle adjustment device 121 in an appropriate manner it can be made sure, that during operation of the wind turbine 100 the housing 122 is always properly aligned with the current wind direction.

The wind turbine 100 further comprises a rotor 110 having three blades 114. In the perspective of Figure 1 only two blades 114 are visible. The rotor 110 is rotatable around a rotational axis 110a. The blades 114, which are mounted at a driving collar 112, extend radial with respect to the rotational axis 110a.

In between the driving collar 112 and a blade 114 there is respectively provided a blade adjustment device 116 in order to adjust the blade pitch angle of each blade 114 by rotating the respective blade 114 around a non depicted axis being aligned parallel with the longitudinal extension of the blade 114. By controlling the blade adjustment device 116 the blade pitch angle of the respective blade 114 can be adjusted in such a manner, that depending on the current wind conditions a maximum wind power can be retrieved from the available wind power.

As can be seen from Figure 1, within the housing there is provided a gear box 124. The gear box is used to convert the number of revolutions of the rotor 110 into a higher number of revolutions of a shaft 125, which is coupled in a known manner to a generator 128. Further, a brake 126 is provided in order to stop the operation of the wind turbine 100 for instance in case of an emergency and/or in case of strong wind conditions, which might harm the wind turbine 100.

The wind turbine 100 further comprises a control system 130 for operating the wind turbine 100 in a highly efficient manner. Apart from controlling for instance the rotor angle adjustment device 121 the depicted control system 130 is also used for adjusting the blade pitch angle of the rotor blades 114 in an optimized manner. Further, as will be described below in more detail, the control system 130 is used for adjusting the yaw angle of the housing 122 respectively of the rotor 110. Therefore, the control system can also be denominated a yaw angle control system 130.

According to the embodiment described here the control system 130 is also used for estimating the effective wind direction of wind, which is driving the rotor 110. Therefore, the control system 130 comprises a determination unit 131 for determining the values of at least two parameters being indicative for an operating condition of the wind turbine 100. According to the embodiment described here, a total number of four parameters being indicative for the operating condition of the wind turbine 100 are used. In the following these four parameters will be described in more detail:
A first parameter is indicative for the wind induced movement of the tower 120. Typically, this movement exhibits an oscillating character and comprises time dependent accelerations. According to the embodiment described here, the value of this first parameter is measured by means of an acceleration sensor 144. This acceleration sensor is capable of measuring (a) accelerations components being oriented perpendicular to the wind direction and (b) accelerations components being oriented parallel to the wind direction. A second parameter is the rotational speed of the rotor 110. The determination unit 131 acquires the value of the second parameter from a rotational speed sensor 143, which is connected to the gear box 124.
A third parameter is the actual power production of the wind turbine 110. The determination unit 131 acquires the value of the third parameter from a power sensor 141. The power sensor 141 is connected to the generator 128.
The fourth parameter is the blade pitch angle of the blade 114. The determination unit 131 acquires the value of the fourth parameter from angle sensors 142, which, according to the embodiment described here, are connected to the respective blade adjustment device 116.

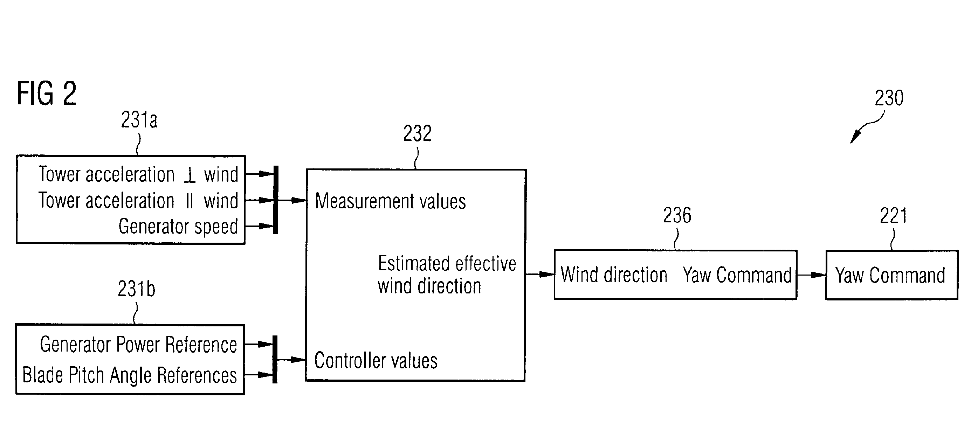

The control system 130 further comprises a learning system 132, which is adapted to receive the values of these four parameters being indicative for the actual operating condition of the wind turbine 100. According to the embodiment described here the learning system is a neural network 132. The neural network 132 has been trained for estimating the effective wind direction of the wind driving the rotor 110. The neural network 132 will be described below in more detail with reference to Figure 2.

Further, the control system 130 comprises an output unit 133 for outputting an output value from the neural network 132. The output value represents the estimate of the effective wind direction of the wind driving the rotor 110.

Figure 2 shows a yaw angle control system 230 for adjusting the yaw angle position of the rotor 110 of the wind turbine 100 depicted in Figure 1. The yaw angle control system 230 comprises a learning system respectively a neural network 232 for estimating the effective wind direction of the wind, which is driving the rotor 110.

As can be seen from Figure 2, the neural network 232 is fed with the values of four different input parameters.

A first input parameter is indicative for the accelerations of the tower. According to the embodiment described here the tower oscillations are input to the neural network 232 by means of two values, a first value being indicative for tower oscillations in a direction being oriented perpendicular to the wind direction, the second value being indicative for tower oscillations in a direction being oriented parallel to the wind direction. A second input parameter is the rotational speed of the rotor 110. The value of this parameter is taken from the generator 128. As can be seen from Figure 2, the values being assigned to the first and to the second parameter are provided by a measurement control unit 231a, which is connected to the neural network 232.

A third parameter is the actual power production of the wind turbine 110. According to the embodiment described here the value of this parameter is obtained from a power reference output of the generator 128. The fourth parameter is the blade pitch angle of the blade 114. The value of this parameter is obtained from angle sensors 142, which are connected to the respective blade adjustment device 116. As can be seen from Figure 2, the values being assigned to the third and to the fourth parameter are provided by a turbine control unit 231b, which is connected to the neural network 232.

Downstream with respect to the neural network 232 there is arranged a yaw controller 236. The yaw controller 236 receives a value being indicative for the actual effective wind direction of the wind, which is driving the rotor 110. Based on the effective wind direction the yaw controller 236 generates a yaw command, which is fed to a yaw angle adjustment device 221. As has already been described above, the yaw angle adjustment device 221 adjusts the yaw angle of the rotor 110 respectively of the housing 122 in such a manner, that the actual output power of the wind turbine is maximized. However, if the mechanical loads on the tower 120 are getting to high, the yaw angle adjustment device 221 may also detune the yaw angle in such a manner that although only a reduced power is generated by the wind turbine 100 mechanical damages of the wind turbine 100 can be prevented. Thereby, also emergency shutdowns of the wind turbine 100 can be avoided.

Descriptive speaking, the neural network 232 is supported with signals from various sensors with a very high availability and with signals from the turbine control unit 231b. The neural network 232 outputs the estimated wind direction which is used as a control error signal by the yaw angle adjustment device 221. Hence, the neural network 232 can intelligently set a new improved target yaw position.

It has to be mentioned that the neural network 232 could also be trained in order to output an estimated actual effective yaw error about the vertical axis of the tower 120. This may be used in order to avoid a potential full shutdown triggered by a classical yaw control algorithm. Hence, again the total power production can be optimized.

The neural network 232 could further be trained in order to output additional controller error signals in order to further optimize the power production of the wind turbine 100.

Although not directly related to a yaw angle control the neural network 232 could furthermore be trained in order to output an estimated wind shear. Such a wind shear, which frequently occurs in real outdoor conditions, is related to an irregular wind speed distribution within the rotational plane of the blades 114. A knowledge of the wind shear condition can be used to avoid a potential full shutdown triggered by known vibration sensors, and hence the total power production of the wind turbine could be optimized.

Furthermore, the neural network 232 could be trained in order to output an estimated turbulence level, which could also be used in order to avoid a potential full shutdown triggered by the classical vibration sensors. Hence, again the total power production could be optimized.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A method for estimating the effective wind direction of wind, which is driving a rotor (110) of a wind turbine (100), the method comprising
• determining values of at least two parameters being indicative for an operational condition of the wind turbine (100),
• inputting the values of the at least two parameters into a learning system (132, 232), and
• outputting an output value from the learning system (132, 232), wherein the output value is an estimate for the effective wind direction.

2. The method as set forth in the preceding claim, wherein the learning system comprises a neural network.

3. The method as set forth in any one of the preceding claims, wherein
the at least two parameters are selected from the following group:
- a path of movement, in particular an acceleration, of at least a portion of a tower (120) of the wind turbine (100),
- the rotational speed of the rotor (110),
- the output power of the wind turbine (100), and
- the blade pitch angle of at least one blade (114) of the rotor (110).

4. The method as set forth in any one of the preceding claims, wherein
the learning system is a leaning system (132, 232), which has been trained on measured data.

5. The method as set forth in any one of the preceding claims, wherein
the learning system is a learning system (132, 232), which has been trained on calculated data.

6. A method for adjusting the yaw angle position of a rotor (110) of a wind turbine (100), the method comprising
• estimating the effective wind direction by carrying out a method as set forth in any one of the preceding claims, and
• adjusting the yaw angle based on the estimated effective wind direction.

7. The method as set forth in the preceding claim, further comprising
• determining the actual power production of the wind turbine (100),
• determining the actual wind speed, and
• calculating a rated power production of the wind turbine (100) based on the determined wind speed,
wherein the adjustment of the yaw angle is carried out based on
- the determined actual power production and
- the calculated rated power production.

8. The method as set forth in claim 7, wherein
if the actual power production is larger than the rated power production,
adjusting the yaw angle comprises a detuning of the yaw angle.

9. The method as set forth in claim 7, wherein
if the actual power production is smaller than the rated power production,
adjusting the yaw angle comprises optimizing the yaw angle.

10. A control system for estimating the effective wind direction of wind, which is driving a rotor (110) of a wind turbine (100), the control system (130, 230) comprising
• a determination unit (131) for determining values of at least two parameters being indicative for an operating condition of the wind turbine (100),
• a learning system (132, 232), which is adapted to receive the values of the at least two parameters, and
• an output unit (133) for outputting an output value from the learning system (132, 232), wherein the output value is an estimate for the effective wind direction.

11. A wind turbine for generating electric power, the wind turbine (100) comprising
• a tower (120),
• a rotor (110), which is arranged at a top portion of the tower (120) and which comprises at least one blade (114), wherein
- the rotor (110) is rotatable around a rotational axis (110a) and
- the at least one blade (114) extends radial with respect to the rotational axis (110a),
• a generator (128) being mechanically coupled with the rotor (110), and
• a control system (130, 230) as set forth in the previous claim.

12. The wind turbine as set forth in the preceding claim, further comprising
• a path of movement sensor (144) for measuring a movement of at least one portion of the tower (120),
• a rotational-speed sensor (143) for measuring the actual rotational speed of the rotor (110),
• a power sensor (141) for measuring the actual power production of the wind turbine (100), and
• an angle sensor (142) for measuring the blade pitch angle of the at least one blade (114),
wherein
each of the path of movement sensor (144), the rotational-speed sensor (143), the power sensor (141) and the angle sensor (142) is coupled to the control system (130, 230) and the control system (130, 230) is adapted to estimate the effective wind direction based on the actual movement of the at least one portion of the tower (120), the actual rotational speed of the rotor (110), the actual power production of the wind turbine (100) and the actual blade pitch angle of the at least one blade (114).

13. A computer program for estimating the effective wind direction of wind, which is driving a rotor (110) of a wind turbine (100), the computer program, when being executed by a control system (130, 230), is adapted for controlling the method as set forth in any one of the claims 1 to 9.
